(19) **Europäisches Patentamt**
**European Patent Office**
**Office européen des brevets**

(11) **EP 4 579 014 A1**

(12) **EUROPEAN PATENT APPLICATION**
published in accordance with Art. 153(4) EPC

(43) Date of publication:
02.07.2025 Bulletin 2025/27

(21) Application number: 23857739.9

(22) Date of filing: 24.08.2023

(51) International Patent Classification (IPC):
*D02G 3/48* (2006.01)    *D02G 3/44* (2006.01)
*D01F 6/62* (2006.01)    *D01F 6/84* (2006.01)
*B60C 9/00* (2006.01)

(52) Cooperative Patent Classification (CPC):
B60C 9/00; D01F 6/62; D01F 6/84; D02G 3/44;
D02G 3/48

(86) International application number:
PCT/KR2023/012526

(87) International publication number:
WO 2024/043707 (29.02.2024 Gazette 2024/09)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 25.08.2022 KR 20220107104
22.08.2023 KR 20230110097

(71) Applicant: HS Hyosung Advanced Materials
Corporation
Seoul 04144 (KR)

(72) Inventors:
• NAM, Yoonhee
Seoul 07295 (KR)
• PARK, Kyungmin
Hwaseong-si Gyeonggi-do 18413 (KR)
• PARK, Jin-Kyung
Yongin-si Gyeonggi-do 16807 (KR)
• JOO, Si-Hwan
Sejong 30100 (KR)

(74) Representative: Westphal, Mussgnug & Partner
Patentanwälte mbB
Am Riettor 5
78048 Villingen-Schwenningen (DE)

(54) **ECO-FRIENDLY TIRE CORD AND TIRE USING SAME**

(57) The present invention relates to an eco-friendly tire cord and a tire using the eco-friendly tire cord, in which use of a recycled polyethylene terephthalate (PET) fiber reduces environmental load and also provides physical properties equivalent to or better than those of a tire cord that is produced by application of a virgin PET fiber and particularly, excellent heat resistance equivalent to or better than that of a tire cord produced by application of a virgin PET.

EP 4 579 014 A1

**Description**

## TECHNICAL FIELD

The present invention relates to an eco-friendly tire cord and a tire using the same and more specifically relates to an eco-friendly tire cord and a tire using the eco-friendly tire cord, in which the use of a recycled polyethylene terephthalate (PET) fiber reduces environmental load and also provides physical properties equivalent to or better than those of a tire cord that is produced by application of a virgin PET fiber.

## BACKGROUND ART

In general, a tire reinforcement material represented by polyethylene terephthalate (hereinafter referred to as 'PET') has excellent mechanical strength, elastic modulus, dimensional stability, and heat resistance, which are important characteristics that should be provided by a rubber reinforcing material. Therefore, the tire reinforcing material is widely used as a rubber composite material, for example, a reinforcing material for a tire, a belt, or a hose.

As environmental pollution caused by the indiscriminate use of plastic materials is accelerated, regulations by the international community are being strengthened. In such circumstances, there is a growing trend for eco-friendly products in vehicles and products related to the vehicles.

For the intended purpose of reducing environmental load or reusing resources, there have been a lot of attempts to reuse recycled polyester fibers for clothing or industrial use, which are obtained by making waste PET bottles, such as water bottles, into fibers.

As compared with a general virgin PET tire cord, a tire cord obtained by applying a recycled PET has a high intrinsic viscosity and low purity, and thus the physical properties of the tire cord are deteriorated, and the appearance thereof is not good as compared with the existing tire cords, and particularly, exhibits characteristics of low heat resistance. As a result, there are limitations to the use of recycled PET in the tire industry, and the recycled PET is not widely utilized. In addition, a recycled resin of PET recycled from PET bottles has a problem in that molding processability is poor, and a tire cord that uses the recycled resin of the recycled PET causes problems of reduced product quality due to reduction in physical properties such as impact resistance, heat resistance, dimensional stability, and poor appearance.

Documents of Related Art

Patent Document

    (Patent document 1) JP 2004-100087 A
    (Patent document 2) JP 2012-30737 A

## DISCLOSURE OF THE INVENTION

## TECHNICAL PROBLEM

One object of the present invention is to provide a tire cord having reinforced heat resistance while having a low environmental load, where the tire cord uses recycled PET chips.

Another object of the present invention is to provide a tire cord and a tire using the tire cord, which have physical properties equivalent to or better than those of products that use only virgin PET, while using recycled PET chips.

## TECHNICAL SOLUTION

One aspect of the present invention for achieving the object described above relates to a tire cord comprising:

a dip cord manufactured by twisting and dipping a recycled polyethylene terephthalate (PET) yarn made from a recycled polyethylene terephthalate (PET), wherein in the tire cord, a strength at room temperature (25°C) after curing at 170°C for 15 minutes is 18.5 kgf or more, a strength at 80°C after curing at 170°C for 15 minutes is 15.5 kgf or more, a heat resistance strength retention rate at 80°C after curing at 170°C for 15 minutes, which is calculated by the following numerical expression 1, is 85.0% or more, and a LASE (@ 5%) value which measured at a high temperature (80°C) is 2.8 g/d or more.

Heat resistance strength retention rate $(T_{25}\text{-}T_{80})$ = (strength under $T_{80}$ conditions/ strength under $T_{25}$ conditions) $\times$ 100 [Numerical Expression 1]

The recycled polyethylene terephthalate (PET) has an intrinsic viscosity of 0.5 to 2.0 dl/g after solid state polymerization and has a weight distribution of 1.8 to 2.5 g/100 ea, and a yarn manufactured from the recycled polyethylene terephthalate (PET) has an isophthalic acid content of 1.5% by mole or less.

The recycled polyethylene terephthalate (PET) yarn has a strength of 7.5 g/d or more, a degree of crystallinity of yarn of 45% or more, and a dimensional stability (E-S, %) of 12.0% or less.

The fineness of the tire cord is in a range of 2,000 to 7,000 d, and the tire cord is a recycled PET tire cord having 2 to 4 plies and having a twist number of 200 to 500 TPM.

Another aspect of the present invention relates to an eco-friendly tire comprising a tire cord manufactured from the recycled polyethylene terephthalate (PET) described above.

## ADVANTAGEOUS EFFECTS

According to the tire cord in various exemplary embodiments of the present invention, it is possible to exhibit such physical properties that provide heat resistance excellent or equivalent to or better than that of the existing PET tire cords, while reducing environmental load by using recycled PET chips. As a result, in the long term, it is possible to exhibit the effects of the eco-friendliness and carbon reduction due to the decrease in the use of PET and the expansion of the use of recycled PET.

In addition, by reusing PET chips in a state where the polymerization process has been completed, as compared with the existing general virgin PET polymerization process, there is no need to establish polymerization process facilities, and the process is simplified, which makes it possible to obtain effects of cost reduction and obtain improvement of price competitiveness.

A tire obtained by applying the tire cord according to the present invention uses recycled PET and makes it possible to provide performance equivalent to or better than that of a tire that uses the existing PET (virgin PET) in terms of eco-friendliness as well as ride comfort, handling stability, durability, uniformity, and noise.

## MODE FOR CARRYING OUT THE INVENTION

Hereinafter, the present invention will be described in more detail,

In the present application, it should be understood that terms such as "include", "have", and the like are intended to specify the presence of a feature, number, step, operation, constitutional element, part, or a combination thereof described in the specification but not intended to exclude in advance the possibility of the presence or addition of one or more other features, numbers, steps, operations, constitutional elements, parts, or combinations thereof.

In the present specification, the term 'recycled polyethylene terephthalate (recycled PET) ' may be meant to encompass a recycled PET resin obtained by recycling waste PET after use for reuse purposes or recycled PET chips containing the recycled PET resin.

In the present specification, the term 'virgin polyethylene terephthalate (virgin PET)' refers to a PET resin that has not been recycled or reused, or PET chips containing the PET resin that has not been recycled or reused.

In the present specification, the term 'recycled PET fiber' or 'recycled PET yarn' refers to a fiber or a yarn, which contains recycled PET.

In a case of being used in the present specification, the 'cord' is a reinforcing belt that constitutes a reinforcing structure of a tire, it refers to a product formed by twisting and mixing multiple strands of yarns.

In the present specification, 'load at specified drawing (LASE)' refers to a load at a specific drawing rate.

In the present specification, 'dimensional stability (E-S)' -is indicated as a sum of intermediate drawing (E) and dry heat shrinkage rate (S). A tire having a low numerical value of dimensional stability (E-S) has small deformation due to heat, and thus in a case where a tire using a cord having a low numerical value of E-S is used, the uniformity of the tire increases, and the performance of the tire can also be improved as compared with a tire using a cord having a high numerical value of E-S.

One aspect of the present invention relates to a tire cord comprising: a dip cord manufactured by twisting and dipping a recycled polyethylene terephthalate (PET) yarn made from a recycled polyethylene terephthalate (PET), wherein in the tire cord, a strength at room temperature (25°C) after curing at 170°C for 15 minutes is 18.5 kgf or more, a strength at 80°C after curing at 170°C for 15 minutes is 15.5 kgf or more, a heat resistance strength retention rate at 80°C after curing at 170°C for 15 minutes, which is calculated by the following numerical expression 1, is 85.0% or more, and a LASE (@ 5%) value which measured at a high temperature (80°C) is 2.8 g/d or more.

[Numerical Expression 1] Heat resistance strength retention rate $(T_{25}-T_{80})$ = (strength under $T_{80}$ conditions/strength under $T_{25}$ conditions) $\times$ 100

[Numerical Expression 1]

In the tire cord according to the present invention, a strength at room temperature (25°C) after curing the tire cord at 170°C for 15 minutes is 18.5 kgf or more. In addition, the strength may be 24 kgf or less. The strength of the tire cord according to the present invention at 80°C after curing at 170°C for 15 minutes is 15.5 kgf or more. Preferably, the strength at 80°C may be 22 kgf or less. The heat resistance strength retention rate at 80°C after curing at 170°C for 15 minutes, which is calculated by the above-described numerical expression 1, is 85.0% or more. The heat resistance strength retention rate at 80°C may be 92.0% or less. The LASE (@ 5%) value measured at a high temperature (80°C) is 2.8 g/d or more. Preferably, the LASE (@ 5%) value measured at a high temperature (80°C) may be 5.0 g/d or less.

In the present invention, the recycled polyethylene terephthalate (PET) has, after solid phase polymerization, an intrinsic viscosity of 0.5 to 2.0 dl/g, preferably 0.9 to 1.5 dl/g, and has a weight distribution of 1.8 to 2.5 g/100 ea. The yarn manufactured from the recycled polyethylene terephthalate (PET) may have an isophthalic acid content of 1.5% by mole or less. Here, the weight distribution is a weight distribution obtained by measuring a total weight of 100 chips and then dividing it by 100.

The polyethylene terephthalate multifilament constituting the tire cord according to the present invention can be obtained by melting and spinning a resin composition containing recycled PET. The manufactured polyethylene terephthalate yarns are used to be subjected to a twisting treatment, a weaving treatment, and a dipping treatment, whereby a dip cord is manufactured.

The recycled PET constituting the tire cord according to the present invention has a weight distribution of 1.8 to 2.5 g/100 ea. As the chip size decreases, the internal/external intrinsic viscosity (IV) difference of the chip decreases, the IV distribution becomes uniform, and the increase in surface area facilitates polymer melting at the same quantity of heat. As a result, there is an advantage of reducing the IV drop and shortening the time of the solid state polymerization reaction, which results in economic advantages. In a case where the size of the chips varies, smaller chips melt first during polymer melting, while chips having a relatively large form do not melt, which makes it difficult to maintain a uniform state. This may cause a decrease in the heat resistance of tire cords and defects in the appearance of the product.

In a case where the intrinsic viscosity of the recycled PET chips in the present invention is less than 0.5 dl/g, the intrinsic viscosity of the final drawn yarn decreases, which makes it impossible to exhibit high strength as a tire cord after a heat treatment. In a case where the intrinsic viscosity of the recycled PET chips exceeds 2.0 dl/g, the non-uniformity of the polymer melt phase and the increase in undissolved crystalline substances causes non-uniformity in the spinning tension and the cross section of the released yarn, which causes a high occurrence of filament cuts during drawing, thereby deteriorating the spinning workability.

The recycled PET used in the present invention has an isophthalic acid content of 1.5% by mole or less. In a case where the content of isophthalic acid exceeds 1.5% by mole, the degree of crystallinity of recycled PET increases, thereby causing an increase in cost due to an energy increase or equipment improvement, and the physical properties of the yarn may deteriorate due to the thermal decomposition of PET. The tire cord according to the present invention may be composed of recycled PET that does not contain isophthalic acid. That is, the tire cord according to the present invention may have an isophthalic acid content of 0% by mole.

In the present invention, the recycled polyethylene terephthalate (PET) yarn may have a strength of 7.5 g/d or more, a degree of crystallinity of yarn of 45% or more, and a dimensional stability (E-S, %) of 12.0% or less.

The recycled polyethylene terephthalate (PET) yarn may have a degree of crystallinity of 45% or more and preferably 50% or less. The strength thereof may be 7.5 g/d or more and may be preferably 9.5 g/d or less. The strength of the recycled PET yarn according to the present invention is preferably 7.5 g/d or more, and in a case where it is less than 7.5, the strength may decrease, which may also reduce shape stability. On the other hand, in a case where the strength of the recycled PET yarn according to the present invention exceeds 9.5 g/d, the cutting of the tie-chain of the recycled PET yarn and the orientation of the non-crystalline region may appear less as compared with the recycled PET yarn in the recycled art.

The recycled PET yarn according to the present invention may have a dimensional stability (E-S, %) of 12% or less and may be preferably 8.0% or more. In the present invention, the numerical value of dimensional stability (E-S index) is a sum of the dry heat shrinkage rate (@ after a lapse of 2 minutes under a load of 0.05 g/d at a temperature of 177°C) and the intermediate drawing (@ under a load of 4.5 g/d). A lower value of the numerical value of dimensional stability indicates that the shape change of the tire cord is small and that the heat resistance characteristics are excellent.

In the present invention, the range of the fineness of the dip cord may be 2,000 to 7,000 deniers, and a combined twisted yarn of 2 to 4 plies having a twist number of 200 to 500 TPM may be included.

A method for manufacturing the recycled PET tire cord according to the present invention is described as follows.

First, in the manufacturing of the recycled PET yarn for a tire cord in the present invention, the spin-draft is increased in a range of 1,500 to 3,000 through high-speed spinning with a spinning speed (a speed of a first godet roller among the six stage godet rollers) of 2,000 m/min or more, preferably 2,300 m/min or more, and the microstructure of the final yarn is changed by setting the intrinsic drawing coefficient in a range of 800 to 1,400 and adjusting the degree of winding such that a total E of the yarn is in a range of 2.0 to 2.5, whereby it is possible to manufacture a tire cord having improved heat resistance and improved dimensional stability.

First, recycled PET chips having an intrinsic viscosity of 0.5 to 2.0 dl/g are melted and then extruded while passing through a nozzle, whereby a released yarn is manufactured. The recycled polyethylene terephthalate chips as described above are melted and then extruded while passing through a nozzle, whereby a released yarn is manufactured. It is recommended to use recycled PET chips having a low IPA content and a uniform weight distribution. In a case where the IPA content is high, the degree of crystallinity and the increase in crystal size during yarn manufacturing are suppressed, which may lower the strength and heat resistance stability of the yarn, and as a result, may lead to a decrease in strength in the tire cord manufacturing process.

Thereafter, the above-described released yarn is allowed to pass through a cooling zone to be rapidly cooled and solidified. In this case, as necessary, a heating device having a certain length is installed in a section of a distance from directly under the nozzle to a starting point of the cooling zone, that is, a length (L) of a hood. This zone is referred to as a delayed cooling zone or a heating zone, and this zone has a length of 50 to 150 mm and a temperature of 300 to 400°C.

In the above-described cooling zone, an open quenching method, a circular closed quenching method, a radial outflow quenching method, and a radial inflow quenching method can be applied according to the method of blowing cooling air; however, the quenching methods are not limited thereto. In this case, the temperature of the cooling air that is injected for rapid cooling in the cooling zone is adjusted to 10°C to 30°C. Such rapid cooling that uses a drastic temperature difference between the hood and the cooling zone aims to increase the solidification point and the spinning tension of the spun polymer, thereby enhancing the orientation of the undrawn yarn and the formation of connecting chains between the crystals. Thereafter, while passing through the cooling zone, the solidified released yarn can be oiled at 0.3% to 1.0% by weight for the released yarn by an emulsion applying device that uses an emulsion having excellent drawing workability and thermal efficiency, while reducing the friction coefficient between single yarns.

The above-described released yarn subjected to oiling is spun to form an undrawn yarn. In this case, it is preferable that the spin-draft is set between 1,500 and 3,000, and regarding the spinning speed, the speed of the first godet roller among the six stage godet rollers is set to 2,000 m/min or more and preferably 2,300 m/min or more. A speed of a fourth stage roller among the six stage godet rollers is set to 5,200 to 5,700 m/min for progression. In a case where spinning is performed at the spin-draft and spinning speed in the above-described range, it is possible to ensure excellent strength of the yarn even at a low drawing ratio. In a case where the above-described spin-draft is less than 1,500, the cross-sectional uniformity of the yarn deteriorates, thereby reducing the drawing workability, and the orientation of the undrawn yarn decreases, thereby reducing the degree of crystallinity and the development of crystallized parts. As a result, in a case where an drawing treatment and a dipping treatment, the thermal stability decreases, thereby reducing the strength of the tire cord, and dimensional stability may decrease in a case where high drawing is performed to improve strength and modulus. In a case where the above-described spin-draft exceeds 3,000, the drawing of the undrawn yarn decreases, thereby reducing the strength and drawing workability of the yarn.

Thereafter, the above-described undrawn yarn is allowed to pass through an drawing roller to manufacture a yarn through multi-stage drawing. The yarn that has passed through the first drawing roller is drawn by being allowed to pass through a series of drawing rollers using a spin drawing method, whereby a yarn is formed. In the drawing process, the undrawn yarn may be subjected to multi-stage drawing, and the temperature of each drawing roller is a temperature higher than the glass transition temperature of the undrawn yarn and lower than 95°C; however, the temperature of the last drawing roller is preferably between 200°C and 250°C. In a case where the temperature of the last drawing roller is below 200°C, the degree of crystallinity and size of the crystals cannot increase during the drawing process, and thus the strength and thermal stability of the yarn cannot be exhibited, whereby the dimensional stability at a high temperature decreases. In a case where the temperature of the last drawing roller exceeds 250°C, the temperature approaches the melting point too closely, and thus, on the contrary, the microstructure of the yarn becomes uniform due to the decomposition of crystals and the like, which may a problem in that the strength of the yarn decreases.

In this case, it is preferable that the winding speed of the drawn yarn is 5,000 m/min or more. In a case where the above-described winding speed is less than 5,000 m/min, productivity may decrease.

In addition, it is preferable that the total drawing ratio of the yarn formed by winding as described above is between 2.0 and 2.5 times. In a case where the drawing ratio is less than 2.0, productivity decreases, and the strength and shape stability of the yarn and cord are reduced. In a case where the drawing ratio exceeds 2.5, the crystallization of the oriented amorphous portion increases, thereby reducing the drawing workability and causing yarn breakage, and in the microstructure of the yarn, the molecular chains of the amorphous portion are broken to reduce the uniformity of the molecular chains, whereby a decrease in the strength utilization may occur, which is not preferable.

Subsequently, the manufactured polyethylene terephthalate yarns are used to be subjected to a twisting treatment, a weaving treatment, and a dipping treatment, whereby a dip cord is manufactured. First, two strands of the polyethylene terephthalate yarns are twisted with a twisting machine in which the ply twist and cable twist are performed stepwise or a direct twisting machine in which the ply twist and cable twist are performed simultaneously, whereby a raw cord for a tire cord is manufactured. The twisted yarn is manufactured by carrying out combined twisting by subjecting the polyethylene terephthalate yarn to ply twist and then cable twist, and generally, the same twist number (twist level) or, as necessary, twist numbers different from each other are applied to the cable twist and the ply twist.

In the present invention, the twist number of the polyethylene terephthalate dip cord is set to the same numerical value for the cable twist and the ply twist at 200/200 twists per meter (TPM) to 500/500 TPM. In a case where the cable twist and the ply twist are set to the same numerical value, the manufactured dip cord is easily maintained to have a straight line without being rotated or twisted, which makes it possible to maximize the exhibition of physical properties. In this case, in a case where the twist number for the cable twist and the ply twist is less than 200/200 TPM, the elongation at break of the raw cord decreases, thereby the fatigue resistance being likely to decrease, and in a case where the twist number exceeds 500/500 TPM, a decrease in strength is large, which is unsuitable for a tire cord.

Thereafter, the woven yarn is dipped in the dipping solution and then dried and subjected to stretching and heat fixation, followed by immersion again in the dipping solution, and then, it is dried and subjected to heat fixation to manufacture a dip cord. The above-described dipping solution is not specifically limited; however, it is preferable to be an epoxy, para-chlorophenol-based resorcinol/ formaldehyde mixed resin (Pexul). In this case, the drying should avoid a rapid treatment at a high temperature, and it is preferable to carry out the drying at 90°C to 180°C for 180 to 220 seconds. In a case where the drying temperature is lower than 90°C, drying may not be sufficient, and gel formation may occur due to the resin of the dipping solution during carrying out drying and a heat treatment. In a case where the drying temperature exceeds 180°C, rapid drying may cause gel formation due to the resin of the dipping solution, and uneven adhesion may occur between the cord and the resin of the dipping solution.

The above-described heat fixation is performed so that a cord impregnated with the dipping solution has appropriate adhesion to the tire rubber, and it is preferable that the heat fixation is performed at a temperature of 220°C to 250°C for 50 to 90 seconds. In a case where the heat fixation is performed for a period of less than 50 seconds, the reaction time of the adhesion liquid is insufficient, which results in reduced adhesion. In a case where the heat fixation is performed for a period of more than 90 seconds, the hardness of the adhesion liquid decreases, which may reduce the fatigue resistance of the cord.

Another aspect of the present invention relates to a tire that includes a tire cord made of the recycled PET described above. The tire according to the present invention is not limited to a radial tire for a passenger car, and it may be composed to serve as various tires, for example, a tire for a medium load or a tire for an automatic two-wheel vehicle.

A tire cord composed of the recycled PET according to the present invention is eco-friendly because it is manufactured using recycled PET. In addition, it has excellent other characteristics such as modulus, strength, and drawing rate, and exhibits high heat resistance and dimensional stability even in a high temperature environment, and thus a flat spot phenomenon is reduced. A tire obtained by employing the tire cord according to the present invention exhibits characteristics that provide excellent ride comfort and traveling performance, while also improving fuel efficiency performance.

Hereinafter, the present invention will be described in more detail with reference to specific examples. However, these examples are merely exemplary and thus are not intended to limit the scope of the present invention.

Example

Example 1

Recycled polyethylene terephthalate chips having an intrinsic viscosity of 1.08 dl/g were spun using a facility for radial in flow quenching, and then a final drawn yarn (yarn) was manufactured. Two strands of the manufactured yarn were subjected to cable twist and ply twist at 370 twists per meter to manufacture a cord yarn.

Subsequently, the above-described cord yarn was immersed in an epoxy resin adhesion liquid in a dipping tank, subsequently dried at 170°C for 150 seconds under a 3.5% stretch in a drying area, and subjected to heat fixation at 245°C for 150 seconds under a 3.0% stretch in a high-temperature stretching area. Then, it was immersed again in resorcinol formaldehyde latex (RFL), and then dried at 170°C for 100 seconds, and relaxed to an extent of 5.0% at 245°C for 40 seconds to manufacture a tire cord as a dip cord.

Example 2

A cord yarn and a dip cord were manufactured by the same method as in Example 1, except that the size of the chip was set to 2.0 to 2.4 g/ea and the uniformity of the chip was set to 65%. Then, the physical properties of the dip cord manufactured in this way were evaluated, and the results are shown in Table 1.

Example 3

A cord yarn and a dip cord were manufactured by the same method as in Example 1, except that the size of the chip was set to 1.8 to 2.5 g/ea and the uniformity of the chip was set to 92%. Then, the physical properties of the dip cord manufactured in this way were evaluated, and the results are shown in Table 1.

Example 4

A cord yarn and a dip cord were manufactured by the same method as in Example 1, except that the size of the chip was set to 1.8 to 2.5 g/ea and the uniformity of the chip was set to 88%. Then, the physical properties of the dip cord manufactured in this way were evaluated, and the results are shown in Table 1.

Comparative Example 1

The same method as in Example 1 was performed to manufacture a PET yarn and a dip cord except that a virgin PET (RE-11) was used instead of the recycled PET chips.

Comparative Example 2

The same method as in Example 1 was performed to manufacture a PET cord yarn and a dip cord, except that recycled PET chips, which is a product of Zhongxing Co, Ltd., and had been produced by physically decomposing PET bottles, were used. Then, the physical properties of the dip cord manufactured in this way were evaluated, and the results are shown in Table 1.

Comparative Example 3

The same method as in Comparative Example 1 was performed to manufacture a PET cord yarn and a dip cord, except that the size of the recycled PET chips, which had been produced at Zhongxing Co, Ltd. by physically decomposing PET bottles, was set to 1.0 to 1.4 g/ea and the chip uniformity was set to 50%. Then, the physical properties of the dip cord manufactured in this way were evaluated, and the results are shown in Table 1.

Experimental Example 1: Evaluation of physical properties of recycled PET yarn and tire cord

The physical properties of the yarn, dip cord, and tire cord, which were manufactured in Examples 1 to 4 and Comparative Examples 1 to 3, respectively, were evaluated according to the following methods, and the results are shown in Table 1 below.

(1) Intrinsic viscosity of PET chip

For the intrinsic viscosity of r-PET and v-PET, chips were pulverized using a Feezer mill or compressed using a wire presser as a pre-treatment process, and then 0.1 g of a specimen was dissolved for 90 minutes in a reagent (90°C) obtained by mixing phenol and 1,1,2,3-tetrachloroethanol at a weight ratio of 6:4 so that the concentration of the specimen was 0.4 g/100ml. Then, the specimen was transferred to an Ubbelohde viscometer and maintained in a 30°C constant-temperature bath for 10 minutes, and the falling time (seconds) of the solution was determined using the viscometer and an aspirator. The falling time (seconds) of the solvent was determined by the same method, and then an R.V. value and an I.V. value were calculated using the following numerical expressions 2 and 3.

Relative viscosity (R.V.) = falling time (seconds) of specimen / falling time (seconds) of solvent  [Numerical Expression 2]

Intrinsic viscosity (I.V.) = 1/4 × (R.V. - 1)/concentration + 3/4 × (ln R.V./concentration)  [Numerical Expression 3]

(2) Content of isophthalic acid (IPA)

The measurement proceeded using 1H-NMR. As a pre-treatment process before measurement, 0.012 to 0.015 g of the pulverized PET chips were placed in a specimen tube, and 0.1 ml of trifluoroacetic acid-d was added thereto. Then, after allowing it to stand for 2 hours until being completely dissolved, 0.5 ml of $CDCl_3$ was added thereto and stirred to prepare the two solvents to mix well. Subsequently, the analysis proceeds with 1H-NMR by using the specimen tube that has been subjected to the pre-treatment. After the analysis, the intrinsic peak of IPA and the peak area are checked to determine the IPA content.

(3) Weight distribution

Usually, the measurement proceeds by repeating measurements 3 to 5 times, and after measuring the weight of 100 chips, the weight distribution is recorded by dividing the measured weight by 100.

(4) Load at specified drawing (LASE)

A load at an drawing corresponding to 5% strain was taken from an drawing-load curve obtained according to an ASTM D885 measurement method. The specimen before the measurement was allowed to stand for 24 hours in an atmosphere of 20°C and 65% RH and then subjected to the measurement.

(5) Strength (kgf) of tire cord

A specimen was allowed to stand for 24 hours at 25°C and a relative humidity of 65%, and a low-speed tensile testing machine manufactured by Instron was used, where the measurement is performed at a specimen length of 250 mm and a tensile speed of 300 m/min after applying a twist of 80 TPM.

(6) Intermediate drawing (%) of tire cord

For the intermediate drawing (drawing at specific load), the drawing of the yarn at a load corresponding to 4.5 g/d was measured on a strong drawing S-S curve, and the drawing of the treated cord at a load of 4.5 g/d was measured.

(7) Dimensional stability index (E-S)

In the present example, the dimensional stability index is determined by summing the intermediate drawing (E) and the dry heat shrinkage rate at a load of 4.5 g/d in a case of the yarn and 4.5 g/d in a case of a treated cord.

Dimensional stability (E-S) = intermediate drawing (E) + dry heat shrinkage rate (S)          [Numerical Expression 4]

(8) Degree of crystallinity (%)

The degree of crystallinity is measured using a density gradient tube by a density method. In a case where the density of the crystalline region is denoted as $\rho c$, the density of the non-crystalline region is denoted as $\rho a$, and the density of the specimen is denoted as $\rho$, the degree of crystallinity (X) is calculated according to the following numerical expression 5.

$$[\text{Numerical Expression 5}]$$

$$X(\%) = (\rho c - \rho)/(\rho c - \rho a) \times 100$$

In a case of polyester, $\rho c = 1.455$ g/cm$^3$, $\rho a = 1.355$ g/cm$^3$.

(9) Heat resistance strength retention rate (%)

The heat resistance strength retention rate is calculated according to the following numerical expression 1 after curing a tire cord at 170°C for 15 minutes.

Heat resistance strength retention rate ($T_{25}$-$T_{80}$) = (strength under $T_{80}$ conditions/ strength under $T_{25}$ conditions) $\times$ 100          [Numerical Expression 1]

[Table 1]

| | | Comparative Example 1 | Comparative Example 2 | Comparative Example 3 | Example 1 | Example 2 | Example 3 | Example 4 |
|---|---|---|---|---|---|---|---|---|
| PET polymerizati on product | IPA (mol%) | 0 | 2.1 | 1.5 | 1.5 | 0.6 | 1.4 | 1.5 |
| | Weight distribution (g/100 ea) | 2.4 to 3.0 | 1.1 to 3.0 | 1.0 to 1.7 | 1.8 to 2.5 | 2.0 to 2.4 | 1.8 to 2.5 | 1.8 to 2.5 |
| | Normal distribution of weight distribution (%) | 30 | 80 | 40 | 30 | 10 | 35 | 15 |
| Physical properties of yarn | Degree of crystallinity (%) | 46.3 | 45.5 | 44.9 | 46.7 | 46.5 | 46.8 | 48.1 |
| | Fineness (deniers) | 1313 | 1515 | 1317 | 1321 | 1522 | 1319 | 1515 |
| | Strength (g/d) | 7.6 | 7.8 | 7.1 | 7. 9 | 7. 9 | 7.7 | 9. 0 |
| | E-S (%, @4.5g/d) | 12.1 | 12.8 | 13.5 | 10.9 | 10.8 | 9.6 | 11.9 |
| Shape of tire cord | Structure (Denier/ply) | 1300 d /2 | 1500 d/ 2 | 1300 d/ 2 | 1300 d /2 | 1500 d/ 2 | 1300 d /2 | 1500 d /2 |
| | Twist number (TPM) | 380 | 370 | 380 | 380 | 370 | 380 | 370 |
| Physical properties of dip cord | Strength (kgf) | 19.0 | 21.9 | 18.2 | 19.4 | 22.5 | 19.1 | 25.0 |
| | LASE (g/d, @5%) | 3.8 | 4.0 | 3.3 | 4.2 | 4.7 | 3.9 | 6.4 |
| Evaluation of heat resistance (170°C *15 minutes, after curing) | Strength (kgf)_25°C | 18.1 | 21.0 | 17.7 | 19.0 | 22.1 | 18.5 | 23.8 |
| | Strength (kgf)_80°C | 14.9 | 17.4 | 13.2 | 16.6 | 19.5 | 15.7 | 21.7 |
| | LASE (g/d, @5%) | 2.6 | 2.7 | 2.0 | 3.1 | 3.2 | 2.8 | 4.5 |
| | Strength retention rate (%, $T_{25}$-$T_{80}$) | 82.3 | 82.9 | 74.2 | 87.3 | 88.2 | 85.0 | 91.2 |

As confirmed through the results in Table 1, the tire cord that uses the recycled PET according to the present invention is eco-friendly because it is manufactured using recycled PET. In addition, it can achieve improved tire performance through the improvement of characteristics of the strength retention rate after curing, which affects tire durability, stability, and flat spot at a high temperature.

Example 5

A radial tire, in which the dip cord manufactured according to Example 1 was applied to a carcass of a tire, was manufactured and the characteristics thereof were evaluated, and the results are shown in Tables 2 and 3 below.

Example 6

A radial tire was manufactured in the same manner as Example 5, except that the dip cord manufactured according to Example 2 was used. Then, the characteristics thereof were evaluated, and the results are shown in Tables 2 and 3 below.

Example 7

A radial tire was manufactured in the same manner as Example 5, except that the dip cord manufactured according to Example 3 was used. Then, the characteristics thereof were evaluated, and the results are shown in Tables 2 and 3 below.

Example 8

A radial tire was manufactured in the same manner as Example 5, except that the dip cord manufactured according to Example 4 was used. Then, the characteristics thereof were evaluated, and the results are shown in Tables 2 and 3 below.

Comparative Example 4

A radial tire was manufactured in the same manner as Example 5, except that the dip cord manufactured according to Comparative Example 1 was used. Then, the characteristics thereof were evaluated, and the results are shown in Tables 2 and 3 below.

Comparative Example 5

A radial tire was manufactured in the same manner as Example 5, except that the dip cord manufactured according to Comparative Example 2 was used. Then, the characteristics thereof were evaluated, and the results are shown in Tables 2 and 3 below.

[Table 2]

| | | Comparati ve Example 4 | Comparati ve Example 5 | Example 5 | Example 6 | Example 7 | Example 8 |
|---|---|---|---|---|---|---|---|
| Carcass | Material | Virgin PET of Comparati ve Example 1 | Recycled PET of Comparati ve Example 2 | Recycled PET of Example 1 | Recycled PET of Example 2 | Recycled PET of Example 3 | Recycled PET of Example 4 |
| | Standard (d/ combined twisted yarn) | 1300 d/2 | 1500 d/2 | 1300 d/2 | 1500 d/2 | 1300 d/2 | 1500 d/2 |
| | Strength (kgf) | 18.3 | 20.3 | 18.5 | 20.7 | 18.2 | 22.8 |
| | Elastic modulus (g/d) | 72 | 72 | 72 | 72 | 72 | 72 |
| Tire | Flatness ratio | 0.6 | 0.6 | 0.6 | 0.6 | 0.6 | 0.6 |
| | Number of carcass layers | 1 | 1 | 1 | 1 | 1 | 1 |

Test Example 2

A 205/65R15V tire manufactured by applying the tire cord manufactured in each of Example 5 to 8 and Comparative Examples 4 and 5 was mounted in a vehicle with a 2,000cc class, and the noise generated inside the vehicle was measured while driving the vehicle at a speed of 60 km/h, and a value in the audible frequency range was indicated as the noise (dB).

A skilled driver traveled a test course to evaluate handling stability and ride comfort by scoring them in units of 5 points out of a total of 100 points, and the results are shown in Table 3 below.

According to a P-metric tire endurance test method of FMVSS 109, the traveling was performed at a traveling speed of 80 km/h for a total of 34 hours under conditions of a measurement temperature of 38°C and 85%, 90%, or 100% of a load marked on a tire, and the durability was determined to be acceptable in a case where no marks of bead separation, cord cutting, belt separation, and the like were found in any part of the tread, side wall, carcass cord, inner liner, bead, and the like.

For the uniformity, radial force variation (RFV) was measured under the condition of 320 kPa of internal pressure in accordance with uniformity test conditions of JASO C607: 2000, after mounting each test tire on the rim and charging a puncture repair material, assuming puncture repairing. The evaluation speed is 10 km/h.

The evaluation results were evaluated based on an index, which was obtained by setting [Comparative Example 4] using virgin PET to 100. The larger the numerical value, the smaller the RFV, which is favorable.

[Table 3]

| | Comparativ e Example 4 | Comparativ e Example 5 | Example 5 | Example 6 | Example 7 | Example 8 |
|---|---|---|---|---|---|---|
| Tire weight (kg) | 9.6 | 9.9 | 9.7 | 9.6 | 9.7 | 10.3 |
| Ride comfort | 100 | 97 | 100 | 100 | 99 | 100 |
| Handling stability | 100 | 95 | 99 | 100 | 98 | 100 |
| Durability | Acceptable | Acceptable | Acceptable | Acceptable | Acceptable | Acceptable |
| Uniformity | 100 | 96 | 100 | 100 | 100 | 100 |
| Noise (dB) | 61.4 | 64.0 | 61.9 | 61.4 | 61.8 | 61.1 |

Referring to the results in Table 3, it can be confirmed that the tire using the dip cord according to the present invention shows reduced noise and exhibits comparable performance in terms of the ride comfort, handling stability, durability, and uniformity of the tire as compared with Comparative Example 4 in which Virgin PET in the related art is used, and Comparative Example 5 in which a conventional recycled PET is applied.

As described above, the description has been made with reference to the preferred examples of the present invention. However, those skilled in the art shall understand that various modifications and changes can be made to the present invention within the scope that does not depart from the spirit and technical range of the present invention. As a result, the true scope of protection of the present invention should be determined only by the claims that will be described later.

**Claims**

1. A tire cord comprising a dip cord manufactured by twisting and dipping a recycled polyethylene terephthalate (PET) yarn made from a recycled polyethylene terephthalate (PET),

   wherein in the tire cord, a strength at room temperature (25°C) after curing at 170°C for 15 minutes is 18.5 kgf or more,
   a strength at 80°C after curing at 170°C for 15 minutes is 15.5 kgf or more,
   a heat resistance retention rate at 80°C after curing at 170°C for 15 minutes, which is calculated by the following numerical expression 1, is 85.0% or more, and
   a LASE (@ 5%) value which measured at a high temperature (80°C) is 2.8 g/d or more,

   [Numerical Expression 1] Heat resistance strength retention rate $(T_{25}-T_{80})$ =

   (strength under $T_{80}$ conditions/strength under $T_{25}$ conditions) × 100.

2. The tire cord according to claim 1, wherein the recycled polyethylene terephthalate (PET) has an intrinsic viscosity of 0.5 to 2.0 dl/g after solid state polymerization and has a weight distribution of 1.8 to 2.5 g/100 ea, and a yarn manufactured from the recycled polyethylene terephthalate (PET) has an isophthalic acid content of 1.5% by mole or less.

3. The tire cord according to claim 1, wherein the recycled polyethylene terephthalate (PET) yarn has a strength of 7.5 g/d or more, a degree of crystallinity of yarn of 45% or more, and a dimensional stability (E-S, %) of 12.0% or less.

4. The tire cord according to claim 1, wherein a fineness of the tire cord is in a range of 2,000 to 7,000 d, and the tire cord is a recycled PET tire cord having 2 to 4 plies and having a twist number of 200 to 500 TPM.

5. The tire cord according to claim 1, wherein the recycled PET yarn is made from a recycled PET that does not contain isophthalic acid.

6. A tire comprising the tire cord according to any one of claims 1 to 5.

**INTERNATIONAL SEARCH REPORT**

International application No.

**PCT/KR2023/012526**

| A. | CLASSIFICATION OF SUBJECT MATTER |
|---|---|

**D02G 3/48**(2006.01)i; **D02G 3/44**(2006.01)i; **D01F 6/62**(2006.01)i; **D01F 6/84**(2006.01)i; **B60C 9/00**(2006.01)i

According to International Patent Classification (IPC) or to both national classification and IPC

| B. | FIELDS SEARCHED |
|---|---|

Minimum documentation searched (classification system followed by classification symbols)

D02G 3/48(2006.01); B60C 15/06(2006.01); B60C 9/00(2006.01); C07C 51/347(2006.01); C07C 63/26(2006.01); C08G 63/80(2006.01); C08G 63/87(2006.01); C08L 67/00(2006.01); D01F 6/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 타이어 코드(tire cord), 재생 폴리에틸렌테레프탈레이트(recycled polyethylene terephthalate), 딥코드(dip cord), 강도(strength)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2004-263334 A (TEIJIN LTD.) 24 September 2004 (2004-09-24)<br>See paragraph [0063]; and claim 5. | 1-6 |
| A | KR 10-2227154 B1 (HYOSUNG ADVANCED MATERIALS CORPORATION) 15 March 2021 (2021-03-15)<br>See entire document. | 1-6 |
| A | JP 2012-041463 A (TOYOBO CO., LTD.) 01 March 2012 (2012-03-01)<br>See entire document. | 1-6 |
| A | JP 2018-130974 A (YOKOHAMA RUBBER CO., LTD.) 23 August 2018 (2018-08-23)<br>See entire document. | 1-6 |
| A | KR 10-2381508 B1 (KIM, Yong Bum) 01 April 2022 (2022-04-01)<br>See entire document. | 1-6 |

☐ Further documents are listed in the continuation of Box C.　　☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **23 November 2023** | **24 November 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2023/012526**

| Patent document cited in search report | | | Publication date (day/month/year) | Patent family member(s) | | | Publication date (day/month/year) |
|---|---|---|---|---|---|---|---|
| JP | 2004-263334 | A | 24 September 2004 | None | | | |
| KR | 10-2227154 | B1 | 15 March 2021 | None | | | |
| JP | 2012-041463 | A | 01 March 2012 | JP | 5716318 | B2 | 13 May 2015 |
| JP | 2018-130974 | A | 23 August 2018 | None | | | |
| KR | 10-2381508 | B1 | 01 April 2022 | EP | 4155289 | A1 | 29 March 2023 |
| | | | | US | 2023-0107495 | A1 | 06 April 2023 |
| | | | | WO | 2023-054830 | A1 | 06 April 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004100087 A
- JP 2012030737 A